# NOUVEAU FASCICULE DE BREVET EUROPEEN

(11) **EP 0 358 983 B2**
(45) Date de publication et mention de la décision concernant l'opposition: **15.11.1995**
(45) Mention de la délivrance du brevet: 22.01.1992
(21) Numéro de dépôt: 89115461.9
(22) Date de dépôt: 22.08.1989
(51) Int. Cl.: A23C 19/09, A01J 27/04

(54) **Procédé de fabrication de fromages composites**
Verfahren zur Herstellung von zusammengesetzten Käsen
Method for producing composite cheeses

(30) Priorité: 15.09.1988 EP 88115060
(43) Date de publication de la demande: 21.03.1990
(73) Titulaire: SOCIETE DES PRODUITS NESTLE S.A., CH-1800 Vevey (CH)
(72) Inventeur: Dupas, Christian, F-50 000 Saint-Lo (FR); Parmantier, Claude, F-50 880 Pont-Hébert (FR)

(56) Documents cités:
- EP-A- 0 169 919
- EP-A- 0 177 175
- EP-A- 0 260 194
- CH-A- 236 002
- CH-A- 249 359
- FR-A- 2 448 287
- FR-A- 2 516 356
- US-A- 2 777 124
- US-A- 2 872 324
- US-A- 3 480 445
- US-A- 3 562 910
- Revue Laitière Francaise, no. 228, 1966

## Description

L'invention concerne un procédé de fabrication de fromages composites de manière continue par coextrusion sous forme de boudin, dans lequel l'une des pâtes fromagères constitue une couche extérieure et la ou les autres pâtes fromagères un noyau.

L'extrusion est utilisée depuis de nombreuses années en fromagerie, notamment dans le fromage en bûchettes de caillé lactique de chèvre et pour le filage des pâtes italiennes de type mozzarella. Dans ces fabrications, l'extrusion ne s'applique qu'à la confection de pièces d'un seul type de pâte.

On a déjà proposé de fabriquer par co-extrusion des produits composites comportant un noyau de fromage, par exemple des céréales ou de la viande fourrées. Les brevets et demandes de brevet EP-A-169.919, EP-A-177.175, US-A-3.480.445 illustrent ces techniques. Bien que la nature exacte de la fourrure ne soit pas spécifiée, il s'agit de pâte de fromage fondu pouvant être traitée thermiquement puisque le produit composite subit une cuisson ultérieure.

On connait également des procédés comprenant injection d'une pâte colorée de nature différente dans un fromage fondu au niveau de la tête remplisseuse, illustrée par exemple dans les brevets US-A-2.777.124 et US-A-2.872.324.

Selon la demande de brevet FR-A-2.603.457, on traite un fromage à pâte pressée déjà affiné à environ 80°C en présence de protéines lactosériques ultrafiltrées de manière à conduire à une texture qui permet son extrusion à chaud.

Selon la demande de brevet FR-A-2.516.356, correspondant au préambule de la revendication 1, on propose de réaliser la coagulation en régime dynamique de deux pâtes de nature différente dans des éléments tubulaires et de débiter des portions en haut des tubes au fur et à mesure de l'avancement du boudin de coagulum. Une telle méthode ne permet pas le contrôle des propriétés du caillé, en l'absence d'égouttage. Par ailleurs, connaissant la fragilité des caillés en cours de formation, cette technique n'est pas applicable en pratique à la fabrication rationnelle et continue de portions de fromages co-extrudés.

Nous avons trouvé qu'on pouvait réaliser des fromages composites ayant les caractéristiques organoleptiques habituelles des fromages frais ou à pâte demi-dure c'est-à-dire égouttés par co-extrusion sous forme de boudin sans recourir à la suppression de l'égouttage.

C'est ainsi que le procédé selon l'invention est caractérisé par le fait que l'on co-extrude plusieurs caillés de fromage égouttés n'ayant pas subi de traitement thermique ni d'affinage, et ceci, dans chacun des cas, à une température inférieure ou égale à la température ambiante.

Pour mettre en oeuvre le procédé, on pousse le ou les caillés de fromage et le cas échéant la pâte non-fromagère constituant le noyau central par exemple au moyen de vis d'archimèdes, simples ou doubles, par pompage sous vide ou par toute autre pompe positive, vers une buse ou une tête d'extrusion composée de deux ou plusieurs parties, notamment coaxiales.

Dans un premier mode de réalisation de la co-extrusion, on dépose un boudin composite continu sur une bande transporteuse en défilement, dont la vitesse linéaire est de préférence ajustée au débit d'extrusion. La forme du boudin est donnée par la section des orifices de sortie, par exemple d'un noyau central et d'un manchon l'entourant. On sectionne ensuite le boudin en portions.

Dans un second mode de réalisation de la co-extrusion, la buse d'extrusion est une tête formeuse pourvue d'un mécanisme à diaphragme qui s'ouvre pour laisser passer le boudin et se ferme ensuite de manière à le sectionner. Les portions sont alors formées au moment même de l'extrusion et peuvent prendre une forme arrondie, sphérique, cylindrique, parallélépipédique ou autre en fonction de la section de l'orifice d'extrusion, du débit d'extrusion et de la cadence de fermeture du diaphragme. La configuration du noyau central est donnée par la section de l'orifice de sortie correspondant. On dépose ensuite les portions, par exemple sur une bande transporteuse en défilement, la vitesse linéaire de la bande transporteuse étant de préférence supérieure au débit d'extrusion, ce qui permet de séparer les portions les unes des autres.

Dans un troisième mode de réalisation de la co-extrusion, on conditionne en pots des pâtes fromagères humides fraîches lactiques à la sortie de la buse d'extrusion. Dans ce cas, on réalise le dosage vertical d'une portion dans un pot à partir d'une alimentation continue en produits par l'intermédiaire d'un mécanisme doseur de portions. Celui-ci peut comprendre, en amont de la buse, un canal latéral constituant une chambre de dosage dans laquelle un piston aspire, puis refoule la portion vers la buse au moyen d'un boisseau rotatif ou basculant. En variante, le conduit d'amenée de produit vers la buse peut être obturé au moyen de clapets commandés, en aval, puis en amont, d'un canal latéral tel que décrit précédemment, la portion du conduit d'amenée située entre les deux clapets constituant la chambre de dosage. Dans les deux cas, la matière est d'abord aspirée dans la chambre de dosage, la buse d'extrusion étant obturée, puis ensuite dosée dans un pot placé sous la buse par refoulement au moyen du piston, par la buse ouverte. Ce mode de réalisation permet de réaliser des effets décoratifs du fait de l'extrusion au coup par coup.

Selon l'invention, la co-extrusion peut être appliquée à la fabrication de fromages frais à partir de caillé à prédominance lactique, sans affinage ultérieur. Dans ce cas, la co-extrusion apporte la possibilité de contraster par exemple deux couleurs, deux aromatisations ou deux textures différentes. Pour bien se prêter à ce traitement mécanique, les pâtes lactiques doivent être malléables et par conséquent relativement humides. Lorsqu'on parie de caillé à prédominance lactique, on veut dire que la coagulation s'opère essentiellement par les bactéries lactiques et que la présure ajoutée le cas échéant joue un rôle mineur d'agent de texture et que par conséquent les fromages sont à pâte fraîche.

De préférence, l'obtention d'une belle présentation du produit implique que la partie extérieure de la pâte, le manchon, soit assez ferme et le noyau comparativement plus souple afin de favoriser la soudure des deux pâtes. Pour bien remplir le noyau, il est avantageux que la pression de la pâte intérieure soit légèrement supérieure à celle de la pâte extérieure lors de l'extrusion.

La fermeté de la pâte extérieure peut s'obtenir par exemple :
― par un pourcentage de matières sèches en poids de 35 à 45%, avec un pourcentage de matières grasses sur matières sèches inférieur à 50% en poids,
― par le maintien du caillé à basse température, par exemple autour de 0°C, et de préférence par la combinaison des mesures précédentes. La souplesse de la pâte intérieure est favorisée :
― par un pourcentage de matières sèches, en poids, de 15 à 50%, avec un pourcentage de matières grasses sur matières sèches de 0 à 70% en poids.
― par le maintien du caillé à une température supérieure à 8°C et de préférence par la combinaison des mesures précédentes.

On peut augmenter la souplesse des pâtes, tant intérieure qu'extérieurs, en diminuant le pourcentage de matières sèches, en poids, par exemple jusqu'à environ 17% et dans ce cas on conditionne les produits en pots, à la sortie de la buse.

Avantageusement, les pâtes peuvent être foisonnées, en particulier celle du noyau de manière à alléger leur texture. Une pâte foisonnée, sucrée ou salée, se présente alors sous la forme d'une mousse de fromage. Elle contient de préférence 0,5 à 3% en poids d'un agent stabilisant, par exemple 1-2% en poids d'un mono- ou diglycéride utilisé habituellement dans les crèmes glacées. La pâte est foisonnée avec un gaz inerte, par exemple à l'azote.

Dans le cas particulier de la co-extrusion des pâtes dans dans des pots, on préfère utiliser des pâtes foisonnées contenant un stabilisant, au moins pour la partie intérieure que l'on extrude à 0-16°C et de préférence à environ 4°C.

Tant la pâte extérieurs que la pâte intérieure peuvent être aromatisées. On peut y incorporer par exemple, pour les versions salées, du sel, des épices, des herbes, des arômes, des colorants, des purées ou morceaux de légumes. Pour les versions sucrées, on peut y incorporer du sucre, des arômes, des colorants, des pulpes, des confitures, ou des morceaux de fruits. Ces incorporations ont lieu dans les caillés égouttés, avant l'extrusion, avant ou après le foisonnement.

Une fois formées, les portions peuvent être enrobées par exemple avec de la chapelure, des grains de poivre concassés, de la cendre etc...

Dans le cas du conditionnement en pots, ceux-ci peuvent être opaques ou avantageusement transparents de manière à laisser apparaître des couches ou strates contrastées des produits intérieur et extérieur lors du remplissage.

Les fromages ainsi fabriqués peuvent être emballés dans des feuilles de cellophane ou d'aluminium ou encore de préférence sous azote dans un emballage thermoformé, de préférence transparent du genre coque, blister ou pot thermosoudé, puis entreposés à froid par exemple à 4-8°C, et distribués.

En variante, la co-extrusion peut être appliquée à la fabrication de fromages à pâte demi-dure, à partir d'un caillé à prédominance présure. Dans ce cas, les portions une fois extrudées devront subir un affinage ultérieur, dans un emballage. Pour ce type d'utilisation, le caillé mis en oeuvre diffère peu des caillés habituellement fabriqués pour les fromages à pâte demi-dure du type St. Paulin, Gouda, Edam, par exemple. Par rapport à la fabrication traditionnelle de ce type de pâte, il n'y a ni moulage, ni pressage. L'acidification a lieu en bac de drainage pendant quelques heures. On broie ensuite le caillé de manière à obtenir une granulométrie fine, puis on le sale et on le malaxe. A ce stade, on peut procéder à l'incorporation d'ingrédients au caillé. On peut incorporer la charcuterie, les céréales, les légumes, les fruits secs en morceaux, par exemple.

Dans un mode de réalisation particulier, on peut également accentuer le goût typé des fromages par incorporation d'arômes de fromage qu'ils soient d'extraction ou de synthèse.

Le caillé broyé, chargé le cas échéant des ingrédients, possède à température ambiante des propriétés physiques permettant sa co-extrusion. A la sortie des buses, il est possible de pratiquer un enrobage, par exemple avec une parafine ou une cire. Le caillé doit ensuite être refroidi à une température inférieure ou égale à 8°C, par exemple à 4-8°C pendant quelques min. de manière à le raffermir. A ce stade, le caillé ne possède pas les caractéristiques organoleptiques d'un fromage à pâte demi-dure. Il est nécessaire de l'affiner pendant une quinzaine de jours à environ 10°C. Pour ce faire, on emballe les portions sous vide dans un film de matière plastique résistant. Le matériau d'emballage est choisi pour permettre d'éviter la dessiccation du produit et son envahissement par une flore de surface contaminante tout en permettant l'évacuation du gaz carbonique. Il est imperméable à la vapeur d'eau et à l'oxygène et relativement perméable au gaz carbonique. L'intérêt d'opérer l'emballage sous vide réside dans la propriété du vide de compacter le caillé broyé, ce qui facilite sa cohésion lors de l'affinage.

Les exemples ci-après, en liaison avec les dessins annexés illustrent l'invention. Dans ces exemples, les parties et pourcentages sont pondéraux, sauf indication contraire.
La Figure 1 représente en a, b, cet d, des fromages frais co-extrudés de différentes formes,
La Figure 2 est une représentation schématique, en coupe, en a, b, c, de fromages frais co-extrudés dans des pots,
La Figure 3 représente en a, b, c, d, e et f des fromages à pâte demi-dure co-extrudés de différentes formes.

### Exemple 1

### Fabrication du caillé lactique

On pasteurise du lait écrémé contenant 50%, respectivement 70% de matières grasses sur matières sèches obtenu par mélange de lait écrémé et de matière grasse lactique, à 72°C pendant 15 s. et on l'envoie dans une cuve à 20°C. On ensemence le lait avec 1% de ferments mésophiles FLORA DANICA®. Après 10 min., on ajoute la présure à raison de 3 ml de présure au 1/10.000ème pour 100 l de lait. Le pH est 6,65. Après 2 h, on brasse pendant quelques min. La coagulation est totale en 16 h, le pH est descendu à 4,5. On tranche le caillé tous les 3 cm. Après 8 h, on soutire le sérum se trouvant en dessous du caillé par ouverture de la vanne de vidange de la cuve, soit environ 15% du volume mis en oeuvre. Après un léger brassage, on vide le caillé dans-des sacs en nylon ou en polyester d'un contenance de 40 ou 60 l. que l'on empile sur caillebotis sur environ 1,5 m de hauteur pour accélérer l'égouttage. L'égouttage est effectué en 6 ou 7 h après 3 retournements des sacs. On peut également égoutter le caillé obtenu à partir de lait plus ou moins écrémé ou enrichi en matières grasses, par centrifugation et le cas échéant le mélanger à des matières grasses ou des matières sèches non grasses du lait pour obtenir la composition souhaitée. On incorpore le cas échéant des ingrédients aux caillés dans un pétrin.

### Co-extrusion

A partir d'un poussoir à viande continu sous vide composé d'une trémie munie d'un bras de gavage en forme d'escargot et d'une pompe à ailettes située sous la trémie, ce bras de gavage étant asservi au débit de la pompe, on force le caillé égoutté à 50% de matières grasses, 1 par une buse constituée de deux tubes coaxiaux, dans la couronne située entre le tube extérieur et le tube intérieur. On alimente le tube intérieur avec le caillé à 70% de matières grasses, 2 foisonné à 80% en volume avec de l'azote à l'aide d'un foisonneur muni d'une pompe positive. Dans d'autres cas, le caillé à 70% de matières grasses est distribué non foisonné par une pompe positive. Le caillé 1 est à 0-8°C et le caillé foisonné 2 à 8-16°C suivant les produits.

On dépose le boudin formé sur une bande transporteuse de même vitesse linéaire que le débit d'extrusion, puis on sectionne le boudin à l'aide d'un couteau et, le cas échéant, on enrobe les portions de chapelure.

En variante, on dose, au moyen d'un dispositif doseur à boisseau, par coextrusion dans des pots, des pâtes lactiques à 15,5% de matière sèche et 30% de matière grasse sur matière sèche à 4°C. La pâte extérieure, non-foisonnée, contient 1% de diglycéride (crémodan®).

La pâte du noyau est de même constitution, sauf qu'elle contient 2% de stabilisant et est foisonnée à 100% à l'azote.

Lorsque les pâtes foisonnées contiennent des morceaux, ceux-ci sont incorporés après foisonnement.

### Produits obtenus

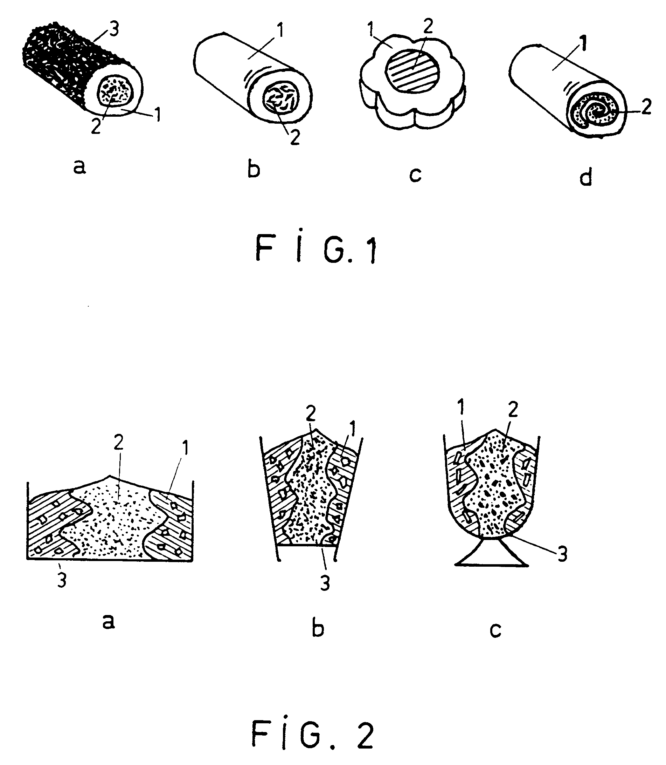

A la figure 1a, la bûchette comporte un noyau 2 de section circulaire qui est constitué de pâte lactique foisonnée aromatisée au paprika et un manchon 1 de section en couronne, constitué de pâte lactique à l'ail et est enrobée de chapelure 3.

A la figure 1b, le noyau 2 est constitué d'une pâte lactique de couleur bleu-verte aromatisée au bleu danois non-foisonnée, le manchon 1 est constitué d'une pâte lactique nature.

A la figure 1c, le tube extérieur a une section en festons. Il forme un manchon 1 de pâte lactique sucrée aromatisée à la fraise de couleur rose. Le tube intérieur est cylindrique et délivre un noyau 2 de pâte lactique non-foisonnée sucrée jaune-orange aromatisée à l'orange. Le boudin est découpé à intervalles rapprochés.

A la figure 1d, le tube extérieur a une section circulaire. Le tube intérieur a une configuration en spirale. Le manchon 1 est constitué d'une pâte lactique à l'ail, le noyau d'une pâte lactique non-foisonnée au paprika. Les bûchettes sont formées à l'aide d'une co-extrudeuse à diaphragme et découpées par un fil disposé à la sortie de la tête d'extrusion.

Aux figures 2a et 2b, les pots en matière plastique transparente 3 contiennent la pâte lactique 2 constitutive du noyau foisonnée à 100% contenant 15% de pulpe de fraise et 5% de sucre, et la pâte lactique non-foisonnée 1 extérieure contenant 22% de morceaux de pêche et 5% de sucre.

A la figure 2c, le pot transparent 3 en forme de coupe contient la pâte de noyau 2 foisonnée à 100%, contenant 1% de sel, des petits morceaux de tomate et du concentre de tomate, la tomate représentant 15%. La pâte extérieure 1 contient 1% de sel et des morceaux de poireaux à raison de 22%.

### Exemple 2

### Fabrication du caillé présure

On pasteurise du lait contenant 3,5% de matières grasses à 72°C pendant 15 s. et on le refroidit à 32°C dans une cuve. On ensemence le lait à 32°C avec 1% de ferments mésophiles FLORA DANICA®, puis on y ajoute de la présure au 1/10000ème à raison de 30 ml pour 100 l de lait. La coagulation s'opère en 35 min. à 32°C. On tranche ensuite le caillé en cubes d'environ 8 mm d'arête en 10 min., puis on brasse pendant 15 min. On soutire alors le sérum correspondant à environ 50% du volume du lait mis en oeuvre. On ajoute à 30°C un volume d'eau équivalent au volume de sérum soutiré, puis on brasse pendant 10 min. On soutire alors le sérum correspondant à environ 50% du volume du lait mis en oeuvre et on place le caillé dans un bac de drainage.

On laisse le caillé s'acidifier à 25°C pendant environ 5 h., jusqu'à un pH de 5,1. Le caillé a 50% de matières sèches et 50% de matières grasses sur matières sèches.

On broye le caillé dans un broyeur, par charges de 20 kg dans un bol de 40 l pendant 3-5 min. jusqu'à obtenir des grains d'environ 1 mm de diamètre. On sale alors le caillé broyé avec 1,5% de sel sec et on le malaxe.

Dans un pétrin, on incorpore le cas échéant des ingrédients au caillé.

### Co-extrusion

La co-extrusion peut s'effectuer comme indiqué à l'exemple 1, soit en formant un boudin continu à 25-30°C que l'on découpe ensuite en portions, soit en confectionnant les portions directement à partir d'une extrudeuse à diaphragme. On refroidit ensuite les portions à 4-8°C pendant quelques min. pour les raffermir.

### Emballage - affinage

On emballe les portions dans un film de matière plastique GRACE-CRYOVAC BB4® sous vide que l'on scelle hermétiquement, puis on entrepose les portions emballées dans un local d'affinage à 10°C pendant 15 j.

### Produits obtenus

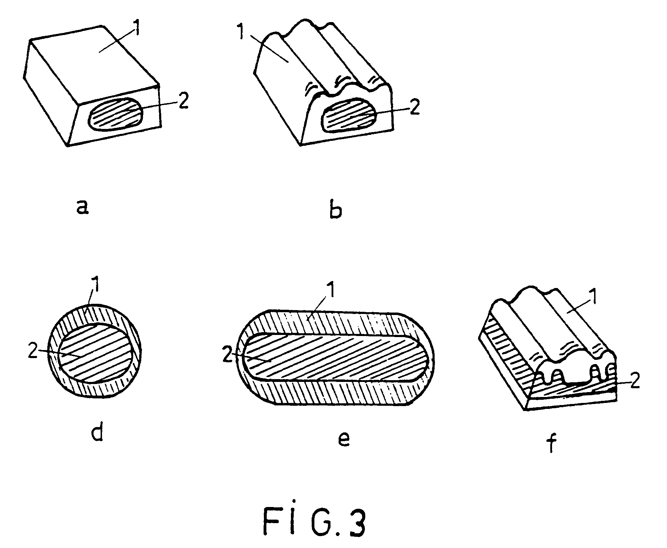

Aux Fig 3a, 3b, le manchon 1 est constitué d'une pâte de St. Paulin, le noyau 2 d'une pâte d'Edam. Les portions sont obtenues à partir d'un boudin continu délivré sur une bande transporteuse, puis découpé en portions.

Aux Fig. 3d, 3e, les fromages composites représentés en coupe sont constitués d'une pâte extérieure de St. Paulin et d'une pâte intérieure d'Edam. Ils sont obtenus au moyen d'une co-extrudeuse à diaphragme, la forme arrondie sphérique ou allongée réalisée dépend du rythme d'ouverture et de fermeture plus ou moins rapide du diaphragme en rapport avec le débit de co-extrusion.

A la Fig. 3f, la configuration du fromage composite est différente, puisqu'elle consiste en une couche centrale de pâte 2 du type Edam entre deux couches de pâte 1 du type St. Paulin. Les portions sont obtenues au moyen d'une co-extrudeuse à diaphragme, la buse étant divisée an compartiments par des parois de séparation.

## Revendications

1. Procédé de fabrication de fromages composites de manière continue par co-extrusion sous forme de boudin, dans lequel l'une des pâtes fromagères constitue une couche extérieure et la ou les autres pâtes fromagères un noyau, caractérisé par le fait que l'on co-extrude plusieurs caillés de fromage égouttés n'ayant pas subi de traitement thermique ni d'affinage, et ceci, dans chacun des cas, à une température inférieure ou égale à la température ambiante.

2. Procédé selon la revendication 1, caractérisé par le fait que, lors de l'extrusion ou après celle-ci, on découpe le boudin en portions, on emballe les portions et on les refroidit à une température inférieure à 8°C.

3. Procédé selon la revendication 2, caractérisé par le fait que l'on met en oeuvre un ou des caillé(s) à prédominance lactique.

4. Procédé selon la revendication 3, caractérisé par le fait que l'on co-extrude deux caillés lactiques de nature différente, que le caillé constituant la couche extérieure, relativement ferme, a une teneur en matière sèche, de 35 à 45% en poids et en matière grasse inférieure à 50%, en poids de la matière sèche et que le caillé constituant le noyau, relativement souple, a une teneur en matière sèche, de 15 à 50% en poids et en matière grasse allant jusqu'à 70% en poids de la matière sèche.

5. Procédé selon la revendication 3 ou 4, caractérisé par le fait que la couche extérieure est extrudée à une température de 0 à 8°C et que le noyau est extrudé à une température supérieure à 8°C.

6. Procédé selon la revendication 5, caractérisé par le fait que le noyau est foisonné avec un gaz inerte.

7. Procédé selon la revendication 1 caractérisé par le fait que l'on met en oeuvre des caillés lactiques contenant 0,5 à 3% de stabilisant et que l'on conditionne les fromages dans des pots après l'extrusion.

8. Procédé selon la revendication 2, caractérisé par le fait que l'on met en oeuvre un ou des caillé(s) à prédominance présure dont le caractère est proche de ceux destinés à la fabrication des fromages à pâte demi-dure, qu'on emballe les portions sous vide dans un matériau plastique imperméable à la vapeur d'eau et à l'oxygène et relativement perméable au gaz carbonique et qu'on affine les fromages dans l'emballage.

9. Procédé selon la revendication 3, caractérisé par le fait qu'on enrobe les portions avec des particules sèches.

## Claims

1. A process for the continuous production of composite cheeses by co-extrusion in the form of a strand, in which one of the cheese curds consists of an outer layer and the other(s) cheese curd(s) consist(s) of a core, characterized in that several drained cheese curds are co-extruded which have not undergo any thermal treatment nor ripening, and in each case at a temperature below or equal to ambient temperature.

2. A process as claimed in claim 1, characterized in that, during or after extrusion, the strand is cut into portions, the portions are wrapped and then cooled to a temperature below 8°C.

3. A process as claimed in claim 2, characterized in that one or more predominantly lactic curd(s) is/are used.

4. A process as claimed in claim 3, characterized in that two different lactic curds are co-extruded, in that the curd consisting of the outer layer, which is relatively firm, has a dry matter content of 35 to 45 % by weight and a fat content less than 50 % by weight of the dry matter and in that the curd consisting of the core, which is relatively soft, has a dry matter content of 15 to 50 % by weight and a fat content up to 70 % by weight of the dry matter.

5. A process as claimed in claim 3 or 4, characterized in that the outer layer is extruded at a temperature of 0 to 8° C and in that the core is extruded at a temperature greater than 8° C.

6. A process as claimed in claim 5, characterized in that the core is aerated with an inert gas.

7. A process as claimed in claim 1, characterized in that lactic curds containing 0.5 to 3% stabilizer are used and the cheeses are packed in containers after extrusion.

8. A process as claimed in claim 2, characterized in that one or more predominantly rennet curd(s) similar in character to those intended for the production of semi-hard cheeses is/are used, the portions are vacuum-wrapped in a plastics material impermeable to water vapor and oxygen and relatively permeable to carbon dioxide and the cheeses are ripened in the wrapping.

9. A process as claimed in claim 3, characterized in that the portions are coated with dry particles.

## Patentansprüche

1. Verfahren zum kontinuierlichen Herstellen von zusammengesetzten Käsen durch Koextrusion in Form eines Stranges, in welchem eine Käsemasse eine Hülle und die andere(n) Käsemasse(n) einen Kern bilden, dadurch gekennzeichnet, dass man mehrere entwässerte Käsemassen koextrudiert, wobei die Käsemassen weder einer thermischen Behandlung noch einer Reifung ausgesetzt werden, und dies in jedem der Fälle bei einer Temperatur unterhalb oder gleich der Umgebungstemperatur.

2. Verfahren nach Anspruch 1, dadurch gekennzeichnet, dass man während der Extrusion oder danach den Strang in Portionen schneidet, die Portionen verpackt und auf eine Temperatur unterhalb 8°C abkühlt.

3. Verfahren nach Anspruch 2, dadurch gekennzeichnet, dass man eine oder mehrere vorwiegend Milchsäurebrüche verwendet.

4. Verfahren nach Anspruch 3, dadurch gekennzeichnet, dass man zwei Milchsäurebrüche unterschiedlicher Natur derart koextrudiert, dass die Hülle aus einem relativen festen Bruch gebildet wird, welcher einen Inhalt an Feststoffen von 35 bis 45 Gewichts % und einen Fettinhalt von weniger als 50 Gewichts % der Feststoffe hat, und dass der Kern aus einem relativen weichen Bruch gebildet wird, welcher einen Inhalt an Feststoffen von 15 bis 50 Gewichts % und einen Fettinhalt von bis 70 Gewichts % der Feststoffe hat.

5. Verfahren nach Anspruch 3 oder 4, dadurch gekennzeichnet, dass die Hülle bei einer Temperatur von 0 bis 8° C und der Kern bei einer Temperatur über 8° C extrudiert werden.

6. Verfahren nach Anspruch 5, dadurch gekennzeichnet, dass der Kern mit einem inerten Gas geschäumt ist.

7. Verfahren nach Anspruch 1, dadurch gekennzeichnet, dass man Milchsäurebrüche mit einem Stabilisatorgehalt von 0,5 bis 3% verwendet, und dass man die Käse nach der Extrusion in Gefässen konditioniert.

8. Verfahren nach Anspruch 2, dadurch gekennzeichnet, dass man eine oder mehrere Käsemassen, vorwiegend aus Lab, verwendet, deren Charakter nahe dem derjenigen Käsemasse ist, die zur Herstellung von halbfesten Käsen verwendet werden, dass man die Portionen unter Vakuum in einem wasserdampf- und sauerstoffundurchlässigen, für Kohlensäuregas relativ durchlässigen Kunststoff verpackt und dass man die Käse in der Verpackung veredelt.

9. Verfahren nach Anspruch 3, dadurch gekennzeichnet, dass man die Portionen mit trockenen Teilchen umhüllt.
